# FASCICULE DE BREVET EUROPEEN

(11) **EP 3 156 309 B1**
(45) Date de publication et mention de la délivrance du brevet: **23.01.2019**
(21) Numéro de dépôt: 16193622.4
(22) Date de dépôt: 13.10.2016
(51) Int. Cl.: B62D 21/11, B62D 27/06

(54) **PARTIE AVANT DE VÉHICULE AUTOMOBILE À PROLONGE AMOVIBLE**
VORDERTEIL EINES KRAFTFAHRZEUGS MIT ENTFERNBARER VERLÄNGERUNG
FRONT PORTION OF A MOTOR VEHICLE WITH REMOVABLE EXTENSION

(30) Priorité: 13.10.2015 FR 1559737
(43) Date de publication de la demande: 19.04.2017
(73) Titulaire: Renault S.A.S., 92100 Boulogne-Billancourt (FR)
(72) Inventeur: BOURLON, Franck, 28300 JOUY (FR)

(56) Documents cités:
- EP-A1- 1 388 485
- JP-A- H08 192 772
- US-A1- 2002 029 921

## Description

### Domaine technique de l'invention

L'invention concerne le domaine de l'automobile, et plus particulièrement des agencements au niveau du compartiment moteur d'un véhicule automobile.

L'invention a pour objet plus particulièrement une partie avant du véhicule automobile.

### État de la technique

Pour satisfaire les nouveaux dessins de carrosserie, les compartiments moteurs deviennent de plus en plus compacts. Il en résulte que l'accessibilité à certains organes moteurs, comme les accessoires moteurs, sont de plus en plus difficiles. Ainsi, l'entretien d'un véhicule automobile peut impliquer le démontage d'un certain nombre de pièces avant de pouvoir changer une pièce défectueuse ou à réparer.

Classiquement, une partie avant de véhicule automobile comporte une voie basse munie d'une traverse avant reliée à un berceau moteur par deux prolonges équipées d'une sous-pendeloque destinée à relier une voie haute du compartiment moteur par l'intermédiaire d'une pendeloque. En outre, des absorbeurs de chocs sont montés sur la traverse avant aux interfaces entre ladite traverse avant et les sous-pendeloques. La traverse avant permet notamment de supporter des accessoires tels que radiateur du véhicule automobile.

Il résulte d'une telle architecture que l'accès à certains accessoires situés entre une prolonge et le moteur requiert un démontage impliquant les étapes successives suivantes : retirer les absorbeurs de chocs, sangler le radiateur à la caisse avant de retirer la traverse avant, retirer la traverse avant, puis enfin retirer la prolonge concernée. On comprend clairement que ces différentes étapes induisent une augmentation des coûts en termes de temps personnel nécessaire au démontage, et un risque de problèmes qualités lors du remontage (fuites, connectiques, bruit, etc.).

Une cinématique similaire peut être appliquée lorsque l'on souhaite retirer une prolonge du document EP1388485 alors encastrée dans le berceau.
En outre, le document US 2002/029921 A1 décrit une partie avant selon le préambule de la revendication 1.

### Objet de l'invention

Le but de la présente invention est de proposer une solution qui remédie à tout ou partie des inconvénients listés ci-dessus.

On tend vers ce but grâce à une partie avant de véhicule automobile comprenant un organe transversal, un berceau, et une prolonge reliant le berceau à une extrémité longitudinale de l'organe transversal, ladite partie avant présentant une première configuration dans laquelle la prolonge est fixée au berceau et à l'organe transversal, et en ce qu'elle comporte une deuxième configuration autorisant l'extraction de la prolonge sans avoir à extraire au préalable l'organe transversal.

Selon l'invention, l'organe transversal comporte un premier boîtier d'accueil, le berceau comporte un deuxième boîtier d'accueil, et dans la première configuration, la prolonge présente deux extrémités coopérant respectivement avec les premier et deuxième boîtiers d'accueil.

Selon une réalisation, les premier et deuxième boîtiers d'accueil comportent chacun des guides agencés de telle sorte que dans la deuxième configuration l'extraction de la prolonge puisse se faire selon un guidage dans une direction transversale au véhicule automobile.

Avantageusement, chaque boîtier d'accueil comporte des première, deuxième et troisième parois disposées de sorte à former un U, et notamment une quatrième paroi disposée de sorte à s'étendre latéralement à la base et aux branches du U.

Notamment, les premier et deuxième boîtiers comportent chacun un trou taraudé, notamment formé dans un fût, et, dans la première configuration, la partie avant du véhicule automobile comporte deux vis présentant des têtes en appui contre la prolonge et des corps filetés vissés dans les trous taraudés pour verrouiller ladite prolonge auxdits premier et deuxième boîtiers.

Préférentiellement, dans la première configuration, les tiges filetées des vis vissées dans les trous taraudés sont sensiblement parallèles à un axe transversal Y du véhicule automobile.

Notamment, le passage de la première configuration à la deuxième configuration est mise en oeuvre par le retrait des vis.

La partie avant peut comporter une troisième configuration dans laquelle l'organe transversal et le berceau sont assemblés à la caisse du véhicule automobile alors que la prolonge a été extraite.

En particulier, l'organe transversal peut comporter une traverse et une sous-pendeloque montée à une extrémité de la traverse, le premier boîtier étant monté sur la sous-pendeloque.

L'invention est aussi relative à un véhicule automobile, caractérisé en ce qu'il comporte une partie avant telle que décrite.

L'invention est aussi relative à un procédé de maintenance d'un véhicule automobile tel que décrit, caractérisé en ce qu'il comporte une étape d'extraction de la prolonge sans avoir extrait l'organe transversal du véhicule automobile.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'une partie avant gauche d'un véhicule automobile dans laquelle la prolonge est fixée,
- la figure 2 est une vue en perspective d'une partie avant gauche d'un véhicule automobile dans laquelle la prolonge est extraite alors que l'organe transversal reste en place.

### Description de modes préférentiels de l'invention

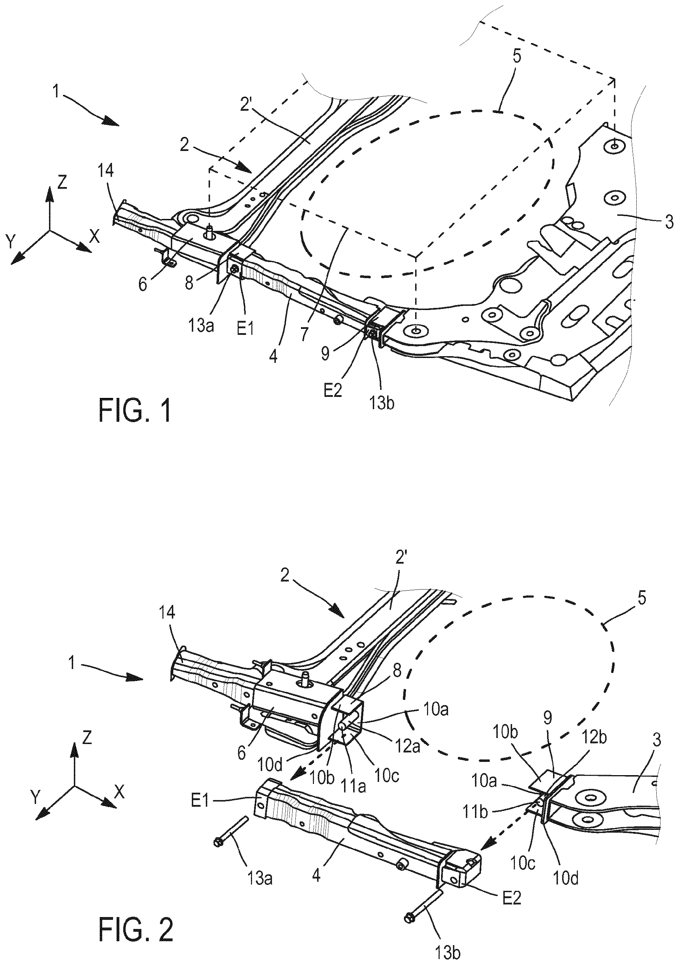

Sur les figures 1 et 2, il est représenté un repère tridimensionnel orthogonal correspondant au référentiel du véhicule automobile assemblé reposant au sol via ses roues. L'axe Z correspond à la vertical du véhicule automobile, les axes X et Y représentent un plan horizontal avec l'axe X sensiblement parallèle à l'axe longitudinal du véhicule automobile et orienté vers l'arrière du véhicule automobile, et avec l'axe Y un axe transversal du véhicule automobile orienté vers la gauche.

Dans la présente description, par « sensiblement parallèle », on entend exactement parallèle ou parallèle à plus ou moins 10°.

Par définition, les termes « avant » et « arrière » sont définis selon la référence au sens de déplacement du véhicule en marche avant.

Comme l'illustrent les figures 1 et 2, la partie avant 1 de véhicule automobile comprend un organe transversal 2, un berceau 3, et une prolonge 4 reliant le berceau 3 à une extrémité longitudinale de l'organe transversal 2 dans une première configuration de la partie avant 1 dans laquelle la prolonge 4 est fixée au berceau 3 et à l'organe transversal 2 (figure 1). En outre, la partie avant 1 comporte une deuxième configuration autorisant l'extraction de la prolonge 4 sans avoir à extraire au préalable l'organe transversal 2.

Sur la figure 2, la partie avant se trouve dans une troisième configuration dans laquelle la prolonge 4 a été extraite, alors que l'organe transversal 2 et le berceau 3 sont assemblés à la caisse du véhicule automobile.

Ainsi, on comprend que contrairement à l'art antérieur, les réparations peuvent être réalisées facilement par un accès latéral au compartiment moteur 5 (représenté par l'ovale en pointillés aux figures 1 et 2) généré par le retrait de la prolonge 4.

Le berceau 3 a notamment pour rôle de relier à la caisse la direction, le bras de suspension, et de tenir un troisième point de fixation du moteur sur la caisse.

La prolonge 4 s'étend sensiblement parallèlement à l'axe X. La prolonge 4, aussi appelée « longeron add-on » dans le domaine, se présente par exemple sous la forme d'une poutre, et est notamment configurée de sorte à participer à l'absorption des chocs longitudinaux au véhicule lors d'un accident.

L'organe transversal 2, qui s'étend notamment sensiblement parallèlement à l'axe Y, peut supporter des éléments ou accessoire du véhicule automobile comme par exemple un radiateur.

L'ensemble comportant au moins l'organe transversal 2, la prolonge 4 et le berceau 3 est aussi appelée voie basse dans le domaine.

L'organe transversal 2 comporte généralement une traverse 2' et une sous-pendeloque 6. La sous-pendeloque 6 est destinée au montage d'une pendeloque (non-représentée) permettant de relier la voie basse du véhicule à une voie haute du véhicule automobile. Le montage de la voie basse à la voie haute n'est pas représenté mais schématisé par les lignes en pointillés 7 de la figure 1. La voie haute comporte généralement un élément de structure, aussi appelé élément de caisse, comme un longeron avant de la caisse. Le longeron avant (non représenté) peut comporter une partie arrière qui s'étend à l'arrière du berceau 3 et une partie avant qui s'élève au dessus du berceau 3. Généralement, la pendeloque relie la sous pendeloque au longeron avant. Ainsi, on comprend que qu'elle que soit la configuration choisie parmi les première, deuxième et troisième configurations, la traverse 2' reste solidaire de la caisse, ou plus particulièrement du longeron avant, notamment par l'intermédiaire de la sous-pendeloque 6 et de la pendeloque.

Les figures 1 et 2 illustrent une partie avant gauche du véhicule automobile. Généralement, l'organe transversal 2 est relié au berceau 3 par l'intermédiaire de deux prolonges montées respectivement d'une part aux deux extrémités longitudinales de l'organe transversal, et d'autre part au berceau 3. En fait, le compartiment moteur 5 est au moins en partie délimité par l'espace formé entre les deux prolonges, l'organe transversal et le berceau. En ce sens, bien qu'il soit décrit en détail l'interaction d'une prolonge avec la partie avant, tout ce qui est décrit peut s'appliquer indifféremment à une prolonge avant gauche (figures 1 et 2) et/ou à une prolonge avant droite.

On comprend de ce qui a été dit précédemment, que la prolonge 4 est amovible de l'ensemble comportant ladite prolonge 4, le berceau 3 et l'organe transversal 2. Pour permettre cette extraction facilitée de la prolonge 4, l'organe transversal 2 comporte un premier boîtier d'accueil 8 et le berceau 3 comporte un deuxième boîtier d'accueil 9. Dès lors, dans la première configuration (figure 1), la prolonge 4 présente deux extrémités E1, E2 coopérant respectivement avec les premier et deuxième boîtiers d'accueil 8, 9.

Avantageusement, les premier et deuxième boîtiers d'accueil 8, 9 comportent chacun des guides agencés de telle sorte que dans la deuxième configuration l'extraction de la prolonge 4 puisse se faire selon un guidage de la prolonge 4 dans une direction transversale (selon l'axe Y) au véhicule automobile. Inversement, dans la troisième configuration (figure 2), l'insertion de la prolonge peut se faire selon un guidage de la prolonge 4 dans une direction transversale (selon l'axe Y) au véhicule automobile.

En particulier, chaque boîtier d'accueil 8, 9 comporte des première, deuxième et troisième parois 10a, 10b, 10c disposées de sorte à former un U, et notamment accolées à une quatrième paroi 10d de telle sorte à former un réceptacle d'une extrémité correspondante de la prolonge 4. En particulier, la quatrième paroi 10d est disposée de sorte à s'étendre latéralement à la base et aux branches du U. Autrement dit, l'agencement des première, deuxième et troisième parois 10a, 10b, 10c forment un profilé dont la section transversale délimite un U muni d'une base à partir de laquelle s'étendent deux branches. Les quatrièmes parois 10d des premier et deuxième boîtiers 8, 9 permettent un maintien de la prolonge 4 selon l'axe X. Les deuxièmes et troisièmes parois des premier et deuxième boîtiers 8, 9 permettent un maintien de la prolonge 4 selon l'axe Z. Les premières parois 10a des premier et deuxième boîtiers 8, 9 forment une butée de la prolonge 4 dans une direction orientée vers le compartiment moteur 5 selon l'axe Y. Outre leur fonction d'accueil, les premières, deuxièmes, troisièmes et quatrièmes parois des premier et deuxième boîtiers permettent d'effectuer une reprise d'effort entre l'organe transversal 2 et la prolonge 4, et entre la prolonge 4 et le berceau 3, en cas de choc frontal au véhicule pour protéger l'habitacle dudit véhicule.

Selon une réalisation, les premier et deuxième boîtiers 8, 9 comportent chacun un trou taraudé 11a, 11b, notamment formé dans un fût 12a, 12b, et, dans la première configuration, la partie avant comporte deux vis 13a, 13b présentent des têtes en appui contre la prolonge 4 et des corps filetés vissés dans les trous taraudés 11a, 11b pour verrouiller ladite prolonge 4 auxdits premier et deuxième boîtiers 8, 9. En particulier, pour réaliser le verrouillage, la prolonge 4 comporte à ces deux extrémités longitudinales opposées un trou autorisant d'une part le passage d'une tige filetée de la vis correspondante, et permettant d'autre part la mise en appui de la tête de la vis correspondante contre une surface périphérique dudit trou.

Dans l'exemple particulier des figures 1 et 2, les fûts 12a, 12b s'étendent à partir de la première paroi correspondante 10a, 10b du boîtier d'accueil associé 8, 9.

En outre, ces fûts participent aussi à la reprise d'effort.

Préférentiellement, dans la première configuration, les tiges filetées des vis 13a, 13b vissées dans les trous taraudés 11a, 11b sont sensiblement parallèles à un axe transversal du véhicule automobile.

Ainsi, on comprend que le simple retrait des deux vis 13a, 13b permet de déverrouiller l'assemblage de la prolonge 4 à l'organe transversal 2 et au berceau 3, autorisant ainsi le retrait de la prolonge 4 par un opérateur en exerçant une traction selon une direction transversale au véhicule automobile. Autrement dit, le passage de la première configuration à la deuxième configuration peut être mise en oeuvre par le retrait des vis 13a, 13b.

Dans la réalisation où l'organe transversal 2 comporte la traverse 2' et la sous-pendeloque 6 montée à une extrémité de la traverse 2', le premier boîtier 8 est préférentiellement monté sur la sous-pendeloque 6. En particulier, la sous-pendeloque 6 et la traverse 2' forment un ensemble monobloc. Par exemple, la sous-pendeloque 6 est fixée par vissage ou soudage à la traverse 2'.

Selon une réalisation, la partie avant comporte un radiateur (non représenté) fixé à la traverse 2', ledit radiateur restant fixé à la traverse 2' que la partie avant soit dans la première configuration, la deuxième configuration ou la troisième configuration.

Par ailleurs, au moins un absorbeur de choc 14 est monté sur l'organe transversal 2, notamment à la sous-pendeloque 6.

On comprend que la partie avant peut comporter un bloc moteur monté dans le compartiment moteur 5, et qu'au moins un élément du bloc moteur présente un accès facilité lorsque la prolonge 4, amovible transversalement, est extraite de la partie avant.

Selon une réalisation particulière applicable à tout ce qui a été dit ci-avant, la partie avant du véhicule automobile peut comporter le berceau 3 relié aux deux extrémités longitudinales de l'organe transversal 2 par deux prolonges dont l'espace d'écartement permet notamment de délimiter une partie du compartiment moteur. Au moins l'une des prolonges (les deux si nécessaires) pouvant être extraite de la manière telle que décrite tout en assurant un maintien du positionnement relatif entre l'organe transversal 2 et le berceau 3 au cours de l'extraction.

L'invention est bien entendu relative à un véhicule automobile comportant une partie avant telle que décrite.

L'invention est aussi relative à un procédé de maintenance d'un véhicule automobile tel que décrit, ledit procédé comportant une étape d'extraction de la prolonge 4 sans avoir extrait l'organe transversal 2 du véhicule automobile. Dans un tel procédé, une étape de maintenance comporte généralement une étape d'accès à un élément du véhicule automobile, l'étape d'accès étant réalisée après l'étape d'extraction d'où il résulte la formation d'une zone d'accessibilité audit élément.

La partie avant telle que décrite présente aussi l'avantage d'autoriser l'utilisation de différentes prolonges sur une même plateforme de véhicule, notamment associée à différentes gammes de véhicule.

## Revendications

1. Partie avant (1) de véhicule automobile comprenant un organe transversal (2), un berceau (3), et une prolonge (4) reliant le berceau (3) à une extrémité longitudinale de l'organe transversal (2), ladite partie avant présentant une première configuration dans laquelle la prolonge (4) est fixée au berceau (3) et à l'organe transversal (2), **caractérisée en ce qu'**elle comporte une deuxième configuration autorisant l'extraction de la prolonge (4) sans avoir à extraire au préalable l'organe transversal (2), ledit organe transversal (2) comportant un premier boîtier d'accueil (8), le berceau (3) comportant un deuxième boîtier d'accueil (9), et **en ce que** dans la première configuration, la prolonge (4) présente deux extrémités (E1, E2) coopérant respectivement avec les premier et deuxième boîtiers d'accueil (8, 9).

2. Partie avant de véhicule automobile selon la revendication précédente, **caractérisée en ce que** les premier et deuxième boîtiers d'accueil (8, 9) comportent chacun des guides agencés de telle sorte que dans la deuxième configuration l'extraction de la prolonge (4) puisse se faire selon un guidage dans une direction transversale (Y) au véhicule automobile.

3. Partie avant de véhicule automobile selon l'une des revendications 1 ou 2, **caractérisée en ce que** chaque boîtier d'accueil (8, 9) comporte des première, deuxième et troisième parois (10a, 10b, 10c) disposées de sorte à former un U, et notamment une quatrième paroi (10d) disposée de sorte à s'étendre latéralement à la base et aux branches du U.

4. Partie avant de véhicule automobile selon l'une quelconque des revendications 1 à 3, **caractérisée en ce que** les premier et deuxième boîtiers (8, 9) comportent chacun un trou taraudé (11a, 11b), notamment formé dans un fût (12a, 12b), et **en ce que**, dans la première configuration, la partie avant du véhicule automobile comporte deux vis (13a, 13b) présentant des têtes en appui contre la prolonge (4) et des corps filetés vissés dans les trous taraudés (11a, 11b) pour verrouiller ladite prolonge (4) auxdits premier et deuxième boîtiers (8, 9).

5. Partie avant de véhicule automobile selon la revendication précédente, **caractérisée en ce que** dans la première configuration, les tiges filetées des vis (13a, 13b) vissées dans les trous taraudés (11a, 11b) sont sensiblement parallèles à un axe transversal Y du véhicule automobile.

6. Partie avant de véhicule automobile selon l'une des revendications 4 ou 5, **caractérisée en ce que** le passage de la première configuration à la deuxième configuration est mise en oeuvre par le retrait des vis (13a, 13b).

7. Partie avant de véhicule automobile selon l'une quelconque des revendications précédentes, **caractérisée en ce qu'**elle comporte une troisième configuration dans laquelle l'organe transversal (2) et le berceau (3) sont assemblés à la caisse du véhicule automobile alors que la prolonge (4) a été extraite.

8. Partie avant selon l'une des revendications précédentes, **caractérisée en ce que** l'organe transversal (2) comporte une traverse (2') et une sous-pendeloque (6) montée à une extrémité de la traverse (2'), le premier boîtier (8) étant monté sur la sous-pendeloque (6).

9. Véhicule automobile, **caractérisé en ce qu'**il comporte une partie avant selon l'une quelconque des revendications précédentes.

10. Procédé de maintenance d'un véhicule automobile selon la revendication précédente, **caractérisé en ce qu'**il comporte une étape d'extraction de la prolonge (4) sans avoir extrait l'organe transversal (2) du véhicule automobile.

## Patentansprüche

1. Vorderteil (1) eines Kraftfahrzeugs, umfassend ein Querelement (2), eine Halterung (3) und eine Verlängerung (4), die die Halterung (3) mit einem Längsende des Querelements (2) verbindet, wobei der Vorderteil eine erste Ausführung aufweist, in der die Verlängerung (4) an der Halterung (3) und dem Querelement (2) befestigt ist, **dadurch gekennzeichnet, dass** er eine zweite Ausführung umfasst, die die Entfernung der Verlängerung (4) gestattet, ohne vorher das Querelement (2) entfernen zu müssen, wobei das Querelement (2) ein erstes Aufnahmegehäuse (8) umfasst, wobei die Halterung (3) ein zweites Aufnahmegehäuse (9) umfasst, und dass in der ersten Ausführung die Verlängerung (4) zwei Enden (E1, E2) aufweist, die mit dem ersten bzw. zweiten Aufnahmegehäuse (8, 9) zusammenwirken.

2. Vorderteil eines Kraftfahrzeugs nach dem vorhergehenden Anspruch, **dadurch gekennzeichnet, dass** das erste und zweite Aufnahmegehäuse (8, 9) jeweils Führungen umfassen, die derart angeordnet sind, dass in der zweiten Ausführung die Entfernung der Verlängerung (4) durch ein Führen in eine Querrichtung (Y) zum Kraftfahrzeug erfolgen kann.

3. Vorderteil eines Kraftfahrzeugs nach einem der Ansprüche 1 oder 2, **dadurch gekennzeichnet, dass** jedes Aufnahmegehäuse (8, 9) erste, zweite und dritte Wände (10a, 10b, 10c), die angeordnet sind, um ein U zu bilden, und insbesondere eine vierte Wand (10d) umfasst, die angeordnet ist, um sich seitlich zur Basis und zu den Schenkeln des U zu erstrecken.

4. Vorderteil eines Kraftfahrzeugs nach einem der Ansprüche 1 bis 3, **dadurch gekennzeichnet, dass** das erste und zweite Gehäuse (8, 9) jeweils ein Gewindeloch (11a, 11b), das insbesondere in einem Schaft (12a, 12b) ausgebildet ist, umfassen, und dass in der ersten Ausführung der Vorderteil des Kraftfahrzeugs zwei Schrauben (13a, 13b) umfasst, die Köpfe, die an der Verlängerung (4) anliegen, und Gewindekörper aufweisen, die in die Gewindelöcher (11a, 11b) geschraubt sind, um die Verlängerung (4) an dem ersten und zweiten Gehäuse (8, 9) zu verriegeln.

5. Vorderteil eines Kraftfahrzeugs nach dem vorhergehenden Anspruch, **dadurch gekennzeichnet, dass** in der ersten Ausführung die Gewindestangen der Schrauben (13a, 13b), die in die Gewindelöcher (11a, 11b) geschraubt sind, im Wesentlichen zu einer Querachse Y des Kraftfahrzeugs parallel sind.

6. Vorderteil eines Kraftfahrzeugs nach einem der Ansprüche 4 oder 5, **dadurch gekennzeichnet, dass** der Übergang von der ersten Ausführung in die zweite Ausführung durch das Herausziehen der Schrauben (13a, 13b) erfolgt.

7. Vorderteil eines Kraftfahrzeugs nach einem der vorhergehenden Ansprüche, **dadurch gekennzeichnet, dass** er eine dritte Ausführung umfasst, in der das Querelement (2) und die Halterung (3) mit dem Karosseriegehäuse des Kraftfahrzeugs verbunden sind, während die Verlängerung (4) entfernt wurde.

8. Vorderteil nach einem der vorhergehenden Ansprüche, **dadurch gekennzeichnet, dass** das Querelement (2) eine Querstrebe (2') und ein Untergehänge (6) umfasst, das an einem Ende der Querstrebe (2') montiert ist, wobei das erste Gehäuse (8) auf dem Untergehänge (6) montiert ist.

9. Kraftfahrzeug, **dadurch gekennzeichnet, dass** es einen Vorderteil nach einem der vorhergehenden Ansprüche umfasst.

10. Verfahren zur Wartung eines Kraftfahrzeugs nach dem vorhergehenden Anspruch, **dadurch gekennzeichnet, dass** es einen Schritt der Entfernung der Verlängerung (4), ohne das Querelement (2) des Kraftfahrzeugs entfernt zu haben, umfasst.

## Claims

1. Front part (1) of a motor vehicle comprising a transverse member (2), a cradle (3) and an extension (4) linking the cradle (3) to a longitudinal end of the transverse member (2), said front part having a first configuration in which the extension (4) is fixed to the cradle (3) and to the transverse member (2), **characterized in that** it comprises a second configuration allowing the extraction of the extension (4) without having to first extract the transverse member (2), said transverse member (2) comprising a first accommodating housing (9), the cradle (3) comprising a second accommodating housing (9), and **in that** in the first configuration, the extension (4) has two ends (E1, E2) cooperating respectively with the first and second accommodating housings (8, 9).

2. Front part of a motor vehicle according to the preceding claim, **characterized in that** the first and second accommodating housings (8, 9) each include guides arranged in such a way that, in the second configuration, the extraction of the extension (4) can be done according to a guidance in a direction (Y) transversal to the motor vehicle.

3. Front part of a motor vehicle according to one of Claims 1 and 2, **characterized in that** each accommodating housing (8, 9) comprises first, second and third walls (10a, 10b, 10c) arranged so as to form a U, and in particular a fourth wall (10d) arranged so as to extend laterally to the base and to the branches of the U.

4. Front part of a motor vehicle according to any one of Claims 1 to 3, **characterized in that** the first and second housings (8, 9) each include a tapped hole (11a, 11b), in particular formed in a stock (12a, 12b), and **in that**, in the first configuration, the front part of the motor vehicle includes two screws (13a, 13b) having heads bearing against the extension (4) and threaded bodies screwed into the tapped holes (11a, 11b) to lock said extension (4) to said first and second housings (8, 9).

5. Front part of a motor vehicle according to the preceding claim, **characterized in that**, in the first configuration, the threaded stems of the screws (13a, 13b) screwed into the tapped holes (11a, 11b) are substantially parallel to a transverse axis Y of the motor vehicle.

6. Front part of a motor vehicle according to one of Claims 4 and 5, **characterized in that** the switch from the first configuration to the second configuration is implemented by the removal of the screws (13a, 13b).

7. Front part of a motor vehicle according to any one of the preceding claims, **characterized in that** it comprises a third configuration in which the transverse member (2) and the cradle (3) are assembled to the body of the motor vehicle whereas the extension (4) has been extracted.

8. Front part according to one of the preceding claims, **characterized in that** the transverse member (2) comprises a crossmember (2') and a sub-pendent (6) mounted at an end of the crossmember (2'), the first housing (8) being mounted on the sub-pendent (6).

9. Motor vehicle, **characterized in that** it comprises a front part according to any one of the preceding claims.

10. Method for maintaining a motor vehicle according to the preceding claim, **characterized in that** it includes a step of extraction of the extension (4) without having extracted the transverse member (2) of the motor vehicle.
